# EUROPEAN PATENT SPECIFICATION

(11) **EP 2 624 402 B1**
(45) Date of publication and mention of the grant of the patent: **04.07.2018**
(21) Application number: 12193944.1
(22) Date of filing: 23.11.2012
(51) Int. Cl.: H02J 1/10, H02J 7/00

(54) **A POWER CONTROLLER AND A METHOD FOR SUPPLYING POWER**
LEISTUNGSREGLER UND VERFAHREN ZUR LEISTUNGSVERSORGUNG
CONTRÔLEUR DE PUISSANCE ET PROCÉDÉ PERMETTANT DE FOURNIR DE L'ÉNERGIE

(30) Priority: 06.02.2012 IN KO01242012
(43) Date of publication of application: 07.08.2013
(73) Proprietor: Siemens Aktiengesellschaft, 80333 München (DE)
(72) Inventor: Karanjikar, Prachi, 422007 Nasik (IN); Muralidharan, Sundar Raghavan, 422009 Nasik (IN); Vyas, Deepika, 422006 Nasik (IN); Waghulde, Shailendra, Nasik (IN)
(74) Representative: Isarpatent

(56) References cited:
- DE-C1- 3 834 867
- US-A- 4 492 876
- US-A- 5 598 041
- US-A- 5 672 958
- US-A- 6 031 743
- US-A1- 2003 184 934
- US-A1- 2011 074 217

## Description

The present invention relates to a power controller and a method for supplying power to a load.

A power supply is an integral entity of an electronic module, especially a power supply that provides a controlled amount of current and/or voltage to the electronic module. The electronic module comprises one or more electronic circuits for performing one or more applications. Certain applications place stringent demands on the type of power supplies used for powering the electronic module, and one such demand is an uninterrupted and regulated supply of power. For example, electronic modules used in programmable logic circuits (PLCs) for continuous monitoring of certain processes in power plants, telecom industries, mining, crude oil extraction, traffic control systems, et cetera, mandate such uninterrupted and regulated supply of power, failing which can result in unsought complications. To achieve the aforesaid uninterrupted and regulated supply of power using a single power supply is a tremendously challenging task.

A redundant power supply, which employs two or more identical power supplies, for example two direct current (DC) power supplies coupled with a power controller is a classical method of solving the aforementioned problem. Upon the failure of and/or aberrations in a first power supply, the power controller automatically invokes a second power supply, thereby ensuring the availability of adequate operational power, which is to be supplied to the one or more electronic circuits. The two DC power supplies can possess identical electrical attributes, such as voltage rating, current rating, input impedance, output impedance, et cetera.

US 5598041 relates to a fault tolerant switching circuit for redundant DC power supplies, in which two DC power supplies, in combination with a plurality of MOSFET switches and a control circuit, supply power to a load.

US 5672958 A discloses a feedback sensing system including a control circuit for detecting power failure of either power supply. In D2, when one power supply fails, the feedback sensing path of the other power supply is rerouted to the output node to directly monitor and regulate the voltage across the load.

US 2011/074217 A1 discloses uninterruptable power supply devices for supplying emergency power to a load in event of mains failure.

US 4492876 A discloses an apparatus for interconnecting one of a plurality of voltage sources with a load. The apparatus comprises metal oxide semiconductor (MOS) transistor means electrically in series with each of the voltage sources and the load, sequencing means for generating control signals for turning off all interconnecting MOS transistors when the voltage of the interconnected voltage sources falls below a pre-determined threshold level, and means for supplying voltage to the load during the time interval that all interconnecting MOS transistors are turned off.

US 2003/184934 A1 discloses a power distribution circuit for supplying power to an electronic system. The power distribution circuit comprises a control unit IC and a plurality of transistors having a first terminal, a second terminal, and a control terminal. The first terminal is coupled to a power source, the second terminal is coupled to a power node for supplying power to the electronic system and a control terminal is coupled to the control unit IC. The control unit IC is configured to activate one of the transistors by driving bias voltage to the control terminal and monitor voltage difference between the first terminal and the second terminal.

DE 3834867 C1 discloses a circuit arrangement for connecting one or more power supply devices with common loads. In D6, reverse operated MOS field-effect transistors are used as transistors.

US 6031743 A discloses a system for isolating faults in a redundant power converter. The system comprises a first switch at an input of the redundant power converter for protecting the redundant power converter from a high input voltage, and a second switch coupled within the redundant power converter prior to an output capacitor. The first switch isolates the redundant power converter from a fault in a third switch and the second switch isolates the redundant power converter from a fault in a fourth switch.

However, the switching circuit described above is very rudimentary, and is inadequate for handling different operational scenarios, for example, output short circuit, input under-voltage, reverse polarity, et cetera.

PULS GmbH produces 24V 40A redundant power supplies, which comprise MOSFET based redundancy modules with internal control systems. The redundancy module generates auxiliary power during an output short circuit, thereby averting the shutdown of the power supply control system during such a scenario. However, the MOSFET switches in these power supplies are always turned ON irrespective of the scenario, thereby leading to reduced life of the switches. Furthermore, the power supplies tend to be expensive, and the control systems are complicated and intricate.

The present invention seeks to provide an efficient, cost-effective, dynamic and robust design of a power controller for supplying an uninterrupted and a regulated supply of power to a load. Furthermore, the power controller is capable of sourcing and sinking extremely high input and output currents respectively, and also obviating the breakdown of the power controller and/or a redundant power supply comprising the power controller during the aforementioned operational scenarios.

The above object is achieved by a power controller according to claim 1 and a method for supplying power according to claim 17.

The power controller disclosed herein for supplying power to a load comprises a first switch, a second switch, a third switch and a control unit. Each switch comprises an input terminal, an output terminal and a control terminal. The input terminals of the first and the second switches receive a first power input and a second power input respectively. The output terminal of the third switch supplies power to the load. The first and the second switches decouple the second and first power inputs respectively. The input terminal of the third switch and the output terminals of the first and second switches are adapted to form a node. This node is connected to the control unit for activating it. The control unit controls at least one of the control terminals, thereby rendering the capability to open or close at least one of the switches in response to an operational condition. The control unit generates at least one of a first, a second, and a third control signal for controlling the respective control terminals of the switches. The activation of the control unit from a node, which is common to all the switches, ensures better controllability of the power supplied to the load under the different operational scenarios. Additionally, the switches are controllable such that a particular switch is capable of being turned off during an undesired operational condition such as an output short circuit, thereby preventing the flow of a huge current arising therefrom.

According to an embodiment of the present invention, the first power input is received from a first power supply and the second power input is received from a second power supply. The power controller, which is capable of handling one or more power inputs received directly from one or more power supplies, is simpler to integrate into a redundant power supply.

According to another embodiment of the present invention, the control unit comprises one or more comparing means for comparing one or more input voltages with one or more respective predefined voltages. The one or more input voltages, viz., a first input voltage, a second input voltage, and a nodal voltage are compared with its respective predefined voltages. The first input voltage is a potential difference between the input terminal of the first switch and a ground of the power controller. The second input voltage is the potential difference between the input terminal of the second switch and the ground. The nodal voltage is the potential difference between the node and the ground. The one or more comparing means provides a basis for comparing the different voltages, for example during different operational scenarios, thereby enhancing the accuracy of controlling the different switches.

According to yet another embodiment of the present invention, the operational condition is an input under-voltage. The input under-voltage is defined as a condition when either the first power supply or the second power supply supplies an amount of power, which is substantially lower than its designated amount of power. The first control signal opens the first switch when the first input voltage is lower than the first predefined input voltage. Similarly, the second control signal opens the second switch when the second input voltage is lower than the second predefined input voltage. By opening the first and second switches accordingly, the power controller enhances the quality and robustness of the power supplied to the load.

According to yet another embodiment of the present invention, the operational condition is an output short circuit. The output short circuit is defined as a condition when a resistance offered by the load is approximately zero, and the entire circuit current flows through the load. The third control signal opens the third switch when the nodal voltage is lower than the predefined nodal voltage. By opening the third switch, the power controller decouples the load from the power controller, thereby averting damage of the power controller, the load and/or the first and second power supplies, and ensures safety during different operational scenarios.

According to yet another embodiment of the present invention, the one or more comparing means comprises one or more switch driving means. The accuracy and robustness of operation of the switches are increased by the one or more switch driving means.

According to yet another embodiment of the present invention, at least one of the switches is a semiconductor switch. Semiconductor switches possess numerous advantages vis-à-vis mechanical switches, because they are electrically controllable. The accuracy and speed of operation are increased, thereby rendering excellent controllability to the switches. Additionally, this involves no wear and tear of the control terminals of the switches when the switches change their state during the operation, thereby increasing the operational life of the switches.

According to a preferred variation of the aforementioned embodiment of the present invention, the first switch, the second switch and the third switches are MOSFET switches. Each MOSFET switch comprises an integral diode, a source electrode, a drain electrode and a gate electrode. The respective gate electrodes control the opening and the closing of the respective MOSFET switches. MOSFET switches are voltage controlled switches and the voltage drops across the switches are marginal. Additionally, MOSFET switches possess very high switching speeds and are immune to temperature variations, thereby increasing the reliability of switching.

According to yet another embodiment of the present invention, the first MOSEFT switch is connected in series with the first power supply and the load. Similarly, the second MOSFET switch is connected in series with the second power supply and the load. The first integral diode is forwardly biased from the first power supply to the load, thereby decoupling the second power input. Similarly, the second integral diode is forwardly biased from the second power supply to the load, thereby decoupling the first power input.

According to a preferred variation of the aforementioned embodiment of the present invention, the third MOSFET is connected in series with the node and the load. The third integral diode is reversely biased from the node to the load. The node is formed by the first drain electrode of the first MOSFET switch, the second drain electrode of the second MOSFET switch and the third drain electrode of the third MOSFET switch. This averts the flow of high currents through the third MOSFET switch during an output short-circuit condition.

By biasing the integral diodes of the MOSFET switches appropriately, the power controller averts damages to the power controller, the first and second power supplies, and/or the load. For example, back feeding of the power supplies during an input under-voltage and/or as well as reverse polarity are avertable by the aforementioned configuration of the MOSFET switches.

According to yet another embodiment of the present invention, the one or more switch driving means comprises one or more discharge paths for the respective control terminals. Discharge paths provide a path for discharging the charge accumulated in the switches, especially in semiconductor switches, thereby enhancing the operational life of the switches.

According to a preferred variation of the aforementioned embodiment of the present invention, at least one of the switch driving means comprises a totem pole circuit. The totem pole circuit facilitates driving of either a positive or a negative current through a control terminal connected to it, thereby providing appropriate amount of the required current for driving the switch, i.e., for the opening and the closing of the switch. Additionally, it provides the discharge path to the control terminal when the respective switch is opened.

According to yet another embodiment of the present invention, the control unit also comprises an auxiliary power supply. The auxiliary power supply generates one or more bias voltages for providing the bias voltages to one or more corresponding pairs of the one or more comparing means and the one or more switching means. Moreover, the one or more bias voltages are isolated from one another, thereby almost nullifying the interference encountered between the operations of the different switches for enhancing the safety and accuracy of operation of the power controller.

According to yet another embodiment of the present invention, the control unit comprises a timer. The timer facilitates the monitoring of the operational condition at predefined intervals of time. This enhances the periodic supervision of the operation of the power controller as well as facilitates the proper resumption of the operations of the power controller when certain undesired operational scenarios are encountered.

According to yet another embodiment of the present invention, a display unit is provided for indicating the first power input, the second power input, and/or the operational condition. The display unit increases the visualisation of the operations of the power controller.

The first power supply, the second power supply, and the power controller according to any of the embodiments disclosed herein form a redundant power supply. The redundant power supply is capable of directly supplying uninterrupted power to the load.

The method of supplying power to the load using the power controller according to any of the embodiments disclosed herein commences with a step of receiving the first power input at the input terminal of the first switch, and the second power input at the input terminal of the second switch. This is followed by connecting the output terminal of the third switch to the load. The method is concluded by a step of controlling the opening and the closing of at least one of the first switch, the second switch, and the third switch for supplying the power to the load. The step of controlling is performed responsive to the operational condition of the power controller, thereby ensuring better controllability of the power supplied to the load under the different operational conditions.

According to an embodiment of the present invention, the method further comprises a step of comparing the first input voltage with the first predefined input voltage, and a step of comparing the second input voltage with the second predefined input voltage. The step of controlling further comprises opening the first switch when the first input voltage is lower than the first predefined input voltage, and opening the second switch when the second input voltage is lower than the second predefined input voltage. This enhances the quality and robustness of the power supplied to the load.

According to another embodiment of the present invention, the method further comprises a step of comparing the nodal voltage with the predefined nodal voltage. The step of controlling further comprises opening the third switch when the nodal voltage is lower than the predefined nodal voltage, thereby enhancing the accuracy of controlling the third switch.

According to yet another embodiment of the present invention, the method further comprises a step of monitoring the nodal voltage at predefined intervals of time. Thereby, the periodic supervision of the operation of the power is enhanced. Additionally, it facilitates the proper resumption of the operations of the power controller when certain undesired operational scenarios are encountered.

According to yet another embodiment of the present invention, the method further comprises a step of indicating at least one of the first input voltage, the second input voltage, the nodal voltage, an output voltage across the load, and the operational condition.
The aforementioned and other embodiments of the invention related to a power controller and a method for supplying power to a load will now be addressed with reference to the accompanying drawings of the present invention. The illustrated embodiments are intended to illustrate, but not to limit the invention. The accompanying drawings contain the following figures, in which like numbers refer to like parts, throughout the description and drawings.
The figures illustrate in a schematic manner further examples of the embodiments of the invention, in which:
- FIG 1: depicts a redundant power supply comprising the power controller featuring a first switch, a second switch, a third switch, and a control unit, for providing power to a load,
- FIG 2: depicts the redundant power supply referred to in FIG 1, wherein the power controller features MOSFET switches as the first, the second, and the third switches,
- FIG 3: depicts a block diagram of the control unit referred to in FIG 1, and
- FIG 4: depicts a flowchart of the method for supplying power to a load using the power controller referred to in FIG 1.

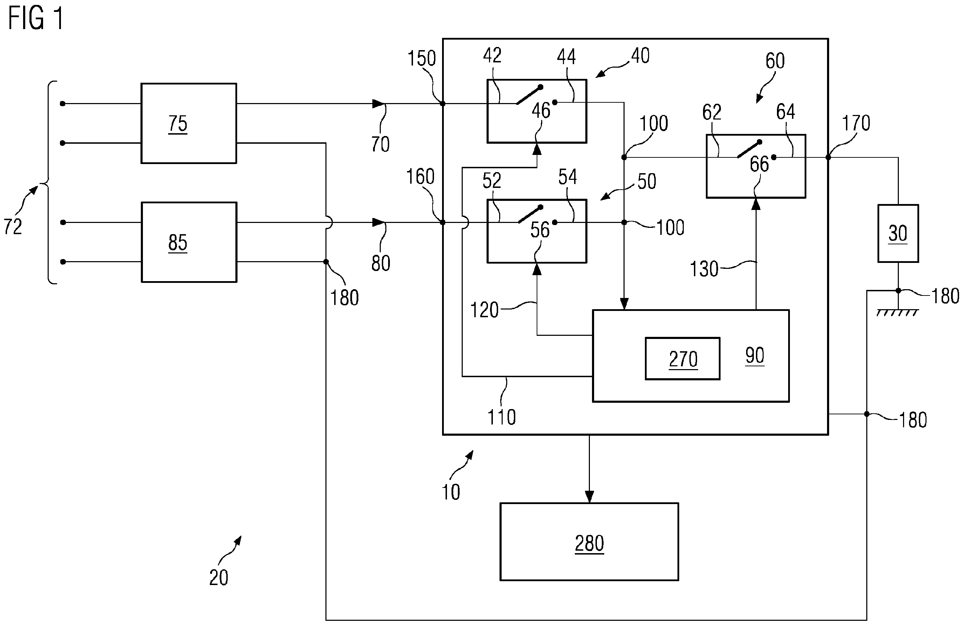

FIG 1 is a schematic illustration of a redundant power supply 20 comprising a power controller 10 for supplying power to a load 30 in accordance with an embodiment described herein.

The term "redundant power supply" is defined as a device capable of supplying power, which comprises at least a plurality of input power supplies for producing an uninterrupted and a regulated supply of power. The power can be supplied to a load, despite the failure of one of the plurality of input power supplies. The term "uninterrupted" is to be construed in accordance with the duration of power that is required to be supplied to the load.

The load 30 is connected to a ground 180. The term "ground" is defined as a common reference point of the redundant power supply 20 from which any voltage is measured.

The redundant power supply 20 of FIG 1 comprises a first power supply 75 and a second power supply 85, which generate a first power input 70 and a second power input 80 respectively. The first power supply 75 and the second power supply 85 are direct current (DC) power supplies, which are connected to an external alternating current (AC) source 72 for producing the first power input 70 and the second power input 80. The power controller 10 receives the first power input 70 and the second power input 80 via its input terminals 150, 160. The first power input 70 and the second power input 80 are characterised by a first input voltage (hereinafter "the first input voltage" will be referred to as "V₁") and a second input voltage (hereinafter "the second input voltage" will be referred to as "V₂") respectively. V₁ is the voltage measured at the input terminal 150, and V₂ is the voltage measured at the input terminal 160 of the power controller 10.

The power controller 10 comprises a first switch 40, a second switch 50, a third switch 60, and a control unit 90. The switches 40, 50, 60 comprise respective input terminals 42, 52, 62, output terminals 44, 54, 64, and control terminals 46, 56, 66. By controlling the control terminals 46, 56, 66, the respective switches 40, 50, 60 can be electrically opened and electrically closed.

The first power input 70 is provided to the load 30 by closing only the first switch 40 and the third switch 60. Whereas, the second power input 80 is provided to the load 30 by closing only the second switch 50 and the third switch 60. The opening and the closing of the switches 40, 50, 60 are mandated by the different operational conditions.

The first, the second, and the third switches 40, 50, 60 can also be two way switches, in which the input terminals 42, 52, 62 and the output terminals 44, 54, 64 are interchangeable without loss of generality. The first, the second, and the third switches 40, 50, 60 can be but not limited to electric, electronic, semiconductor, electromechanical, or a combination thereof.

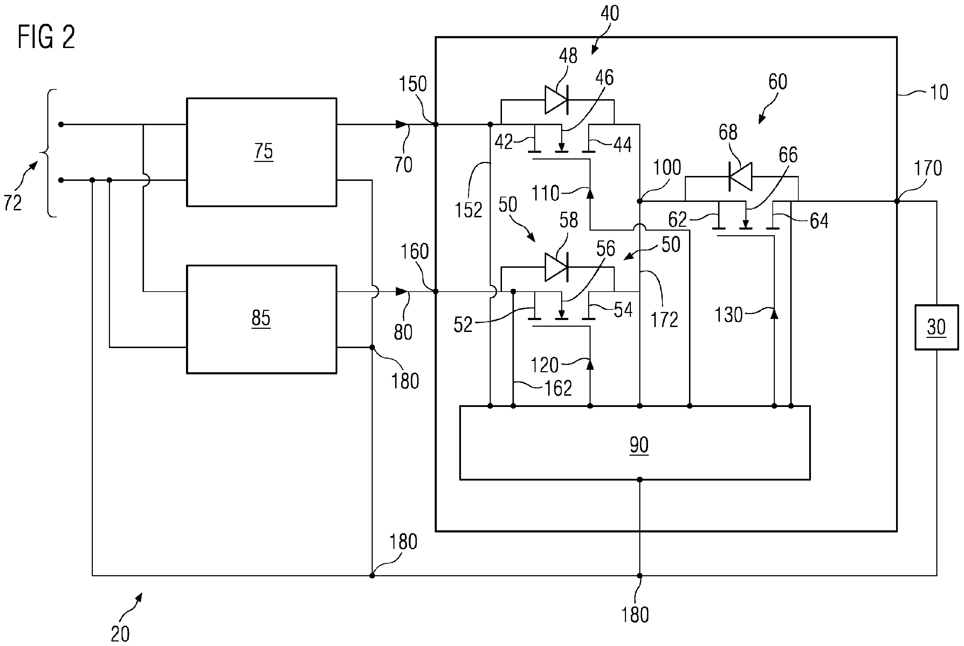

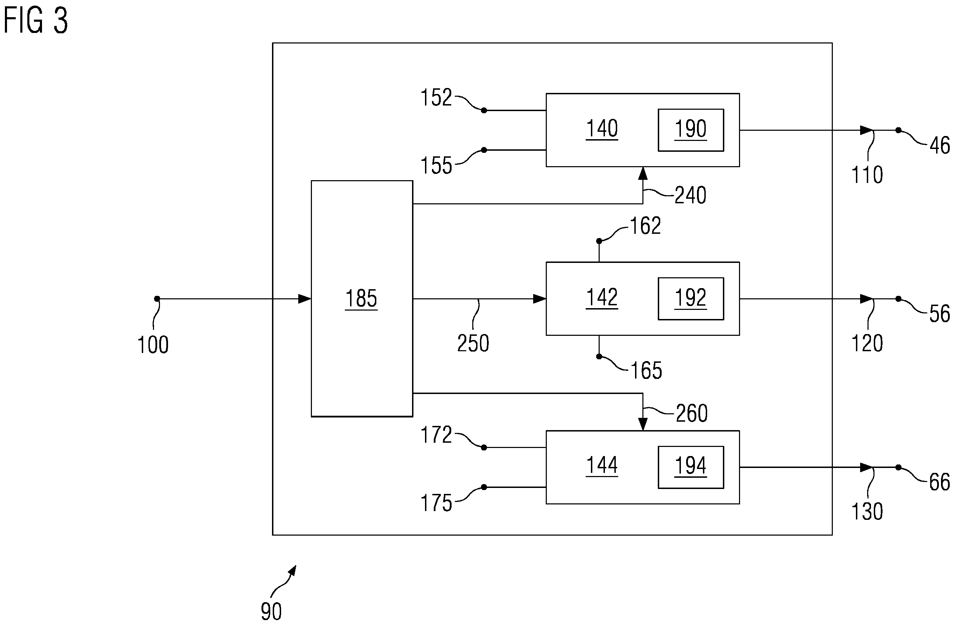

The first, the second, and the third switches 40, 50, 60 are semiconductor switches according to an embodiment of the present invention. This aspect will be elucidated in the subsequent sections with reference to FIG 2 and FIG 3.

The first input terminal 42 of the first switch 40 is connected in series with the input terminal 150 for receiving the first power input 70. The second input terminal 52 of the second switch 50 is connected in series with the input terminal 160 for receiving the second power input 80. Therefore, the potential differences at the first input terminal 42 and the second input terminal 52 are V₁ and V₂ respectively.

The first switch 40 and the second switch 50 are connected to respectively receive the first power input 70 and the second power input 80 such that the second power input 80 and the first power input 70 are decoupled respectively. This is explained with reference to FIG 2 in the subsequent sections.

The third input terminal 62 of the third switch 60, the first output terminal 44 of the first switch 40 and the second output terminal 54 of the second switch 50 are adapted to form a node 100. In this context, the "node 100" is defined as a common point or a common connection between the third input terminal 62, the first output terminal 44 and the second output terminal 54, such that the third input terminal 62, the first output terminal 44 and the second output terminal 54 are held at the same potential difference. The potential difference or the voltage measured at the node 100 is termed a nodal voltage (hereinafter "the nodal voltage" will be referred to as "Vₙ").

The power controller comprises an output terminal 170, which supplies power to the load 30. The power supplied to the load is termed as a power output, which is characterised by an output voltage (hereinafter "the output voltage" will be referred to as "Vₒ"). Vₒ is the voltage measured at output terminal 170 and can also be termed as a load voltage.

The input terminals 150, 160 and the output terminal 170 can comprise one or more sockets, receptacles, pins or ports, or a combination thereof, for receiving and/or providing power as an input and/or an output.

The control unit 90 controls at least one of the control terminals 46, 56, 66 for the opening and the closing of the respective switches 40, 50, 60. The control unit 90 is connected to the node 100, wherefrom it receives Vₙ for its activation for performing various operations. The operations of the control unit 90 can be classified into two major categories, viz., monitoring and controlling. "Monitoring" or is defined as the process of monitoring the different voltages of different sections of the redundant power supply 20, for example monitoring V₁, V₂, and Vₒ. "Controlling" is defined as the process of controlling the control terminals 46, 56, 66 of the respective switches 40, 50, 60 based on the monitored voltages V₁, V₂, Vₙ and Vₒ. This aspect of the control unit 90 will be elucidated with reference to FIG 3.

Based on the monitored voltages V₁, V₂, and Vₒ, the control unit 90 generates at least a first control signal 110, a second control signal 120, and a third control signal 130 for controlling the first control terminal 46, the second control terminal 56, and the third control terminal 66 for the opening and the closing of the first switch 40, the second switch 50, and the third switch 60 respectively.

The control unit 90 generates the aforementioned control signals 110, 120, 130 in response to an operational condition of the power controller 10. Some of the operational conditions are an input under-voltage, an output short-circuit, testing, maintenance, et cetera.

The term "under-voltage", which is to be construed with reference to a power supply, is an operational condition that is defined as a state, wherein the output voltage of the power supply is substantially lower than the voltage that is required to perform a task using the power supply.

When an under-voltage in the first power supply 75 is encountered, the value of V₁ will be substantially lower than a first predefined input voltage 155 (refer to FIG 3) (hereinafter "the first predefined input voltage 155" will be referred to as "Vₚ₁"). In this case, the first control signal 110 is generated by the control unit 90, and the same is supplied to the first control terminal 46 such that the first switch 40 is opened. This disconnects the first power supply 75 from the power controller 10, which in turn disconnects the same from the load 30. Now, the power controller 10 switches to the second power supply 85. This is achieved by generating the second control signal 120 and providing the same to the second control terminal 56 such that the second switch 50 is closed. Thus, the condition of back feeding the first power supply 75 from the second power supply 85 is averted.

Similarly, when an under-voltage in the second power supply 85 is encountered, the value of V₂ will be substantially lower than a second predefined input voltage 165 (refer to FIG 3) (hereinafter "the second predefined input voltage 165" will be referred to as "Vₚ₂"). In this case, the second control signal 120 is generated by the control unit 90, and the same is supplied to the second control terminal 56 such that the second switch 50 is opened. This disconnects the second power supply 85 from the power controller 10, which in turn disconnects the same from the load 30. Now, the power controller 10 switches to the first power supply 75. This is achieved by generating the first control signal 110 and providing the same to the first control terminal 46 such that the first switch 40 is closed. Thus, the condition of back feeding the second power supply 85 from the first power supply 75 is averted.

The term "output short circuit", which is to be construed with reference to the load 30, is defined as a condition when a resistance offered by the load 30 is approximately zero, and the entire circuit current, in this case the entire current in the redundant power supply 20, flows through the load 30.

When an output short circuit is encountered, the value of the nodal voltage Vₙ will be substantially lower than a predefined nodal voltage (hereinafter "the predefined nodal voltage" will be referred to as "Vₚₙ"). This would mean that a substantial value of the entire current flowing in the redundant power supply 20 will flow through the third switch 60, when the third switch 60 is closed. This condition is hazardous and can lead to a damage of the first power supply 75 and/or the second power supply 85. The control unit 90 disconnects the load 30 from the redundant power supply 20 by generating a third control signal 130 and providing the same to the third control terminal 66 such that the third switch 60 is opened. Thus, the power controller 10 isolates the load 30 from other entities of the redundant power supply 20.

A "control signal" is defined as a signal that when provided to a control terminal of a switch can either open or close the switch. For example, in a digital switch, a logical "0" and logical "1" can be used for turning on or off the switch or vice versa, depending on the type of logic.

The power controller 10 also comprises a timer 270, which monitors the aforementioned operational condition of the power controller 10 at predefined intervals of time. The timer 270 generates timing pulses and/or can prompt the power controller 10 to monitor the different voltages V₁, V₂, and Vₒ, and/or the operational condition of the power controller 10. The timer 270 can be an analog timer or a digital timer.

A "predefined interval of time" is defined as a period of time, which can last from a couple of microseconds to a couple of minutes or hours. It depends on the type of operational condition and the manner in which a user wants to operate the power controller 10 and/or the redundant power supply 20 for monitoring a condition, a problem, a test case, et cetera. For example, during an output short circuit, the timer 270 can prompt the power controller 10 to generate 1Hz pulses, so that the condition of the load 30 can be monitored once every second.

The power controller 10 also comprises a display unit 280 for displaying at least one of the different voltages V₁, V₂, and Vₒ. The display unit 280 can also indicate an operational condition. For example, the display unit 280 can comprise at least a Light Emitting Diode (LED), or a Liquid Crystal Display (LCD), or an analogue monitor for indicating the operational condition of the redundant power supply 20.

FIG 2 depicts the redundant power supply 20, in which the power controller 10 features semiconductor switches. The first switch 40 is a first N-channel MOSFET switch (hereinafter "the first N-channel MOSFET switch 40" will be referred to as "Q₁"), wherein the first input terminal 42 is a first source electrode, the first output terminal 44 is a first drain electrode, and the first control terminal 46 is a first gate electrode. Similarly, the second switch 50 is a second N-channel MOSFET switch (hereinafter "the second N-channel MOSFET switch 50" will be referred to as "Q₂"), wherein the second input terminal 52 is a second source electrode, the second output terminal 54 is a second drain electrode, and the second control terminal 56 is a second gate electrode. Similarly, the third switch 60 is a third N-channel MOSFET switch (hereinafter "the third N-channel MOSFET switch 60" will be referred to as "Q₃"), wherein the third input terminal 62 is a third drain electrode, the third output terminal 64 is a third source electrode, and the third control terminal 66 is a third gate electrode.

Q₁ is connected in series with the first power supply 75 and the load 30 with its integral diode 48 (hereinafter referred to as "the first body diode 48") forwardly biased from the first power supply 75 to the load 30. Q₂ is connected in series with the second power supply 85 and the load 30 with its integral diode 58 (hereinafter referred to as "the second body diode 58") forwardly biased from the second power supply 85 to the load 30.

Thus by connecting Q₁ and Q₂ in the aforementioned manner, the second power input 80 cannot flow through Q₁, and therefrom into the first power supply 75, irrespective of whether Q₁ is ON or OFF. Similarly, the first power input 70 cannot flow through Q₂, and therefrom to the second power supply 80, irrespective of whether Q₂ is ON or OFF. Thus, Q₁ and Q₂ decouple the second power input 80 and the first power input 70 respectively, thereby averting the back-feeding of the first power supply 75 and the second power supply 85 during the input under-voltage operational condition. Therefore, Q₁ and Q₂ can be also termed as a first decoupling MOSFET and a second decoupling MOSFET. Additionally, configurations of Q₁ and Q₂ further prevent reverse polarity of the input power supplies 75, 85, because the first power input 70 and the second power input 80 cannot flow though Q₁ and Q₂ if the polarities of the first and second power supplies 75, 85 are reversed.

Q₃ is connected in series with the node 100 and the load 30 with its integral diode 68 (hereinafter referred to as "the third body diode 68") reversely biased from the node 100 to the load 30. The first drain electrode 44 of Q₁, the second drain electrode 54 of the Q₂ and the third drain electrode 64 of Q₃ are adapted to form the node 100.

Thus, if the operational condition is an output short circuit, Q₃ is turned OFF, thereby preventing the flow of short circuit current through Q₃. Since the third body diode 68 is reverse biased during the output short circuit, the load 30 is isolated from the first and second power supplies 75, 85. Since Q₃ is in series with the load 30, it can also be termed as a series MOSFET.

Q₁, Q₂ and Q₃ are used as digital switches, which can be turned ON or turned OFF by providing an appropriate gate voltage. The term "ON" and "OFF", in the context of a MOSFET is to be construed respectively as "Saturation" and "Cut-off" modes of the MOSFET.

The control unit 90 generates the first control signal 110, the second control signal 120 and the third control signal 130 for controlling the first gate electrode 46, the second gate electrode 56, and the third gate electrode 66, thereby switching Q₁, Q₂ and Q₃ ON or OFF. According to FIG 2, Q₁, Q₂ and Q₃ are N-channel MOSFET switches. Thus, if the first, the second and the third gate electrodes 46, 56, 66 are controlled by holding them sufficiently negative with respect to their respective the first source electrode 42, the second source electrode 52 and the third drain electrode 64, Q₁, Q₂ and Q₃ are turned OFF, and vice versa. The reverse of the aforesaid is applicable for P-channel MOSFETs.

The different voltages V₁, V₂, and Vₙ are monitored or sensed by the control unit 90 using SENS1 152, SENS2 162 and SENS3 172 respectively, and are compared with Vₚ₁, Vₚ₂, and Vₚₙ for generating the first control signal 110, the second control signal 120 and the third control signal 130. For example, if V₁ < Vₚ₁, as experienced during an under-voltage in the first power supply 75, the first control signal 110 turns OFF Q₁ and vice versa. If V₂ < Vₚ₂, as experienced during an under-voltage in the second power supply 85 the second control signal 120 turns OFF Q₂ and vice versa. Similarly, if Vₙ < Vₚₙ, as experienced during an output short circuit, the third control signal 130 turns OFF Q₃ and vice versa.

FIG 3 depicts a schematic diagram of the control unit 90 of the power controller 10. The control unit 90 comprises an auxiliary power supply 185, one or more comparing means 140, 142, 144, the timer 270 and one or more switch driving means 190, 192, 194. The one or more switch driving means 190, 192, 194 are MOSFET drivers for amplifying the first, the second, and/or the third control signals 110, 120, 130. The comparing means 140, 142, 144 are comparators, which compare V₁, V₂, and Vₙ with Vₚ₁, Vₚ₂, and Vₚₙ. The comparators 140, 142, 144 generate outputs, which are provided to MOSFET drivers 190, 192, 194 for controlling the respective gate electrodes 46, 56, 66 of Q₁, Q₂ and Q₃ for switching ON or switching OFF Q₁, Q₂ and Q₃.

Vₚ₁, Vₚ₂, and Vₚₙ are predefined values of voltages, which are arrived at based on the type of redundant power supply 20, requirements of a user, a predefined criterion, one or more operating conditions, et cetera. Vₚ₁, Vₚ₂, and Vₚₙ are adjustable and user specified. For example, in a 24V 40A redundant power supply, Vₚ₁ and Vₚ₂ can be 19V each, and Vₚₙ can be 5V. A predefined voltage is also construable as a reference voltage, when referred to in the context of a comparator.

A "comparator" is an electronic device or a circuit, which is capable of comparing two voltage signals, wherein one of the input signals is a reference signal, for producing an output that indicates the magnitude of the input signal with respect to the reference signal.
The different monitored voltages V₁, V₂, and Vₙ are compared with the respective predefined voltages Vₚ₁, Vₚ₂, and Vₚₙ. For example, V₁ and Vₚ₁ are compared to generate the first control signal 110. The first control signal 110 switches ON Q₁ when V₁ > vₚ₁ and switches OFF Q₁ when V₁ < Vₚ₁. Similarly, V₂ and Vₚ₂ are compared to generate the second control signal 120. The second control signal 120 switches ON Q₂ when V₂ > Vₚ₂ and switches OFF Q₂ when V₂ < Vₚ₂. Also, Vₙ and Vₚₙ are compared to generate the third control signal 130. The third control signal 130 switches ON Q₃ when Vₙ > Vₚₙ and switches OFF Q₃ when Vₙ < Vₚₙ.

The comparators 140, 142, 144 can be realised using an operational amplifier, which is configured either as a comparator or a differential amplifier, which indicates a state change when one of its input signal exceeds a reference signal. The comparators 140, 142, 144 can also be realised using Zener diodes. In this case, the Zener voltage is to be construed as the reference voltage, and the Zener diode turns ON, which is an indication of the state change, when the input voltage to the Zener diode exceeds the Zener voltage.

Outputs of the comparators 140, 142, 144 are Boolean values, which indicate a state equivalent to either a "logical 1" or a "logical 0". The outputs are then provided to the MOSFET drivers 190, 192, 194, which switch ON (corresponds to logical 1) or switch OFF (logical 0) Q₁, Q₂ and Q₃ accordingly.

The MOSFET drivers 190, 192, 194 are circuits, which can produce appropriate currents to switch ON and switch OFF Q₁, Q₂ and Q₃. In an exemplary embodiment of the present invention, the MOSFET driver 190, 192, 194 comprises a totem pole circuit (not illustrated). For example, the totem pole circuit associated with Q₁ switches ON Q₁, when the output of the corresponding comparator is logical 1, thereby closing Q₁. Similarly, the totem pole circuit switches OFF Q₁, when the output of the corresponding comparator is logical 0, thereby opening Q₁. Additionally, when Q₁ is OFF, the totem pole circuit also provides a discharge path to Q₁ for discharging the charge accumulated in Q₁, through the first gate electrode 46 to ground via the totem pole circuit. Similarly, additional totem pole circuits can be associated with Q₂ and Q₃ also for performing the aforementioned operations. Furthermore, MOSFET drivers 190, 192, 194 can be one or more commercially available customized integrated circuits that are capable of performing the aforementioned operations.

The auxiliary power supply 185 of the control unit 90 receives power from the node 100 for generating one or more bias voltages 240, 250, 260 (hereinafter "the one or more bias voltages 240, 250, 260" will be referred to as "bias voltages 240, 250, 260"). The bias voltages 240, 250, 260 are decoupled from one another, whereas corresponding pairs of comparators 140, 142, 144 and MOSFET drivers 190, 192, 194 are biased.

The auxiliary power supply 185 can comprise an arrangement of a pulse width modulator (PWM) circuit along with a pulse transformer for generating the bias voltages 240, 250, 260. The PWM circuit is provided with a reference voltage (V_{ref}), which generates a pulse waveform with a frequency in accordance with V_{ref}. The pulse waveform is then provided to a pulse transformer, which can comprise a plurality of secondary windings for producing a plurality of decoupled pulse waveforms. The secondary windings can be provided with rectifiers for converting the pulse waveforms into DC. The rectified pulsed waveforms form the bias voltages 240, 250, 260 for biasing the corresponding pairs of comparators 140, 142, 144 and MOSFET drivers 190, 192, 194.
The redundant power supply 20 according to FIG 1, for the purpose of illustration and explanation, comprises only the first power supply 75 and the second power supply 85. However, the redundant power supply 20 can comprise a third power supply, a fourth power supply, and the like, and also, corresponding switches connected in series with the respective power supplies, et cetera for achieve the objectives set forth.

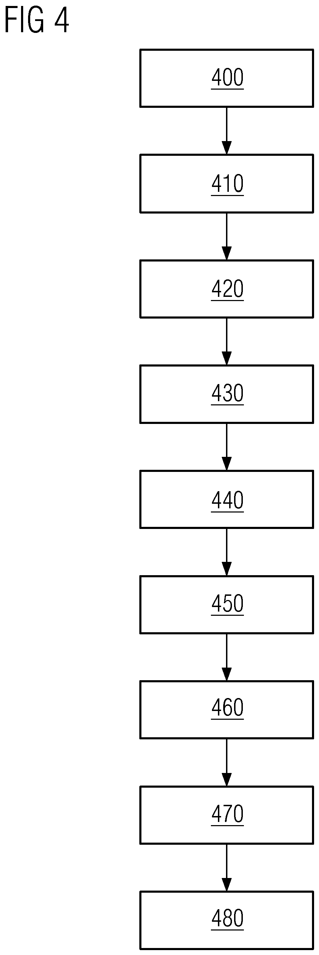

FIG 4 depicts a flowchart of a method for supplying power to the load 30 of using the power controller 10 according to any of the embodiments described herein. The method commences with a step 400 of receiving the first power input 70 at the first source electrode 42 of Q₁, a step 410 of receiving the second power input 80 at the second source electrode 52 of Q₂, and a step 420 of connecting the third source electrode 62 of Q₃ to the load 30. In step 470, at least one of the gate electrodes 46, 56, 66 is controlled such that Q₁, Q₂ and Q₃ are accordingly switched ON or OFF in response to an operating condition for supplying power to the load 30.

In accordance with step 430, step 440, and step 450, V₁ is compared with Vₚ₁, V₂ is compared with Vₚ₂, and Vₙ is compared with Vₚₙ respectively. The step 470 of controlling at least one of the gate electrodes 46, 56, 66 is based on the steps 430, 440, and 450. If V₁ < Vₚ₁, then Q₁ is switched OFF, and Q₁ is switched ON only if V₁ > Vₚ₁. If V₂ < Vₚ₂, then Q₂ is switched OFF, and Q₂ is switched ON only if V₂ > Vₚ₂. Similarly, if Vₙ < Vₚₙ, then Q₃ is switched OFF, and Q₃ is switched ON only if Vₙ > Vₚₙ. Thus, according to the different operational conditions, Q₁, Q₂ and Q₃ are controlled for supplying power to the load 30.

In accordance with a step 460, Vₙ is monitored at periodic intervals of time. If Vₙ < Vₚₙ, during an output short circuit, then Q₃ is switched OFF. Q₃ is to be switched ON for providing supply to the load 30 during normal operating conditions. However, this can be achieved only when the short circuit at the load 30 is resolved. This condition is monitored by the control unit 90 at predefined intervals of time. Thus, the short circuit condition is resolved when Vₙ > Vₚₙ, and subsequently switching ON Q₃.

The method concludes with a step 480 of indicating, which includes indicating at least one of the operational conditions, V₁, V₂ and Vₙ on the display unit 280. However, step 480 is an optional step for the working of the present invention.

Though the invention has been described with reference to specific embodiments, this description is not meant to be construed in a limiting sense. Various examples of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A power controller (10) for supplying power to a load (30), the power controller (10) comprising:
- a first switch (40), a second switch (50), and a third switch (60), each comprising an input terminal (42, 52, 62), an output terminal (44, 54, 64) and a control terminal (46, 56, 66),
wherein the input terminals (42, 52) of the first switch (40) and the second switch (50) receive a first power input (70) and a second power input (80) respectively, and
wherein the output terminal (64) of the third switch (60) supplies the power to the load (30), wherein the input terminal (62) of the third switch (60) and the output terminals (44, 54) of the first switch (40) and the second switch (50) are adapted to form a node (100),
**characterized by**:
- a control unit (90) for comparing one or more input voltages (V₁, V₂, Vₙ) at the input terminals (42, 52) and the node (100) with one or more respective predefined voltages (Vₚ₁, Vₚ₂, Vₚₙ) and controlling at least one of the control terminals (46, 56, 66) for opening and closing of at least one of the first switch (40), the second switch (50), and the third switch (60) respectively in response to an operational condition of the power controller (10) if any of the input voltages (V₁, V₂, Vₙ) is lower than the respective predefined voltages (Vₚ₁, Vₚ₂, Vₚₙ)
wherein the node (100) is connected to the control unit (90) for activating the control unit (90) for generating at least one of a first control signal (110), a second control signal (120), and a third control signal (130) for controlling at least one of the respective control terminals (46, 56, 66).

2. The power controller (10) according to claim 1,
wherein the first power input (70) is received from a first power supply (75), and
wherein the second power input (80) is received from a second power supply (85).

3. The power controller (10) according to claim 1, wherein the control unit (90) further comprises one or more comparing means (140, 142, 144) for comparing at least
- a first input voltage (V₁) with a first predefined input voltage (Vₚ₁),
- a second input voltage (V₂) with a second predefined input voltage (Vₚ₂), and
- a nodal voltage (Vₙ) with a predefined nodal voltage (Vₚₙ), wherein the first input voltage (V₁) is a potential difference between the input terminal (42) of the first switch (40) and a ground (180) of the power controller (10), wherein the second input voltage (V₂) is the potential difference between the input terminal (52) of the second switch (50) and the ground (180), and
wherein the nodal voltage (Vₙ) is the potential difference between the node (100) and the ground (180).

4. The power controller (10) according to claim 2 or 3, wherein the operational condition is an input under-voltage, wherein the first control signal (110) opens the first switch (40) when the first input voltage (V₁) is lower than the first predefined input voltage (Vₚ₁), and
wherein the second control signal (120) opens the second switch (50) when the second input voltage (V₂) is lower than the second predefined input voltage (Vₚ₂).

5. The power controller (10) according to any of the claims 2 to 4, wherein the operational condition is an output short circuit,
wherein the third control signal (130) opens the third switch (60) when the nodal voltage (Vₙ) is lower than the predefined nodal voltage (Vₙₚ).

6. The power controller (10) according to any of the claims 3 to 5, wherein the one or more comparing means (140, 142, 144) further comprises one or more switch driving means (190, 192, 194) for respectively amplifying at least one of the first control signal (110), the second control signal (120), and the third control signal (130).

7. The power controller (10) according to any of the claims 1 to 6, wherein at least one of the first switch (40), the second switch (50) and the third switch (60) is a semiconductor device.

8. The power controller (10) according to any of the claims 1 to 7, wherein the first switch (40), the second switch (50) and the third switch (60) are Metal Oxide Semiconductor Field Effect Transistor (MOSFET) switches, each comprising an integral diode (48, 58, 68), a source electrode, a drain electrode, and a gate electrode, wherein the respective gate electrodes (46, 56, 66) control the opening and the closing of the respective MOSFET switches (40, 50, 60).

9. The power controller (10) according to claim 8, wherein
- the first MOSFET switch (40) is connected in series with the first power supply (75) and the load (30) with its integral diode (48) forwardly biased from the first power supply (75) to the load (30), and
- the second MOSFET switch (50) is connected in series with the second power supply (85) and the load (30) with its integral diode (58) forwardly biased from the second power supply (85) to the load (30).

10. The power controller (10) according to claim 8 or 9, wherein
- the third MOSFET (60) is connected in series with the node (100) and the load (30) with its integral diode (68) reversely biased from the node (100) to the load (30), wherein the first drain electrode (44) of the first MOSFET switch (40), the second drain electrode (54) of the second MOSFET switch (50) and the third drain electrode (62) of the third MOSFET switch (60) are adapted to form the node (100).

11. The power controller (10) according to any of the claims 6 to 10, wherein the one or more switch driving means (190, 192, 194) further comprises at least one or more discharge paths for the respective control terminals (46, 56, 66).

12. The power controller (10) according to any of the claims 6 to 11, wherein at least one of the switch driving means (190, 192, 194) comprises a totem pole circuit.

13. The power controller (10) according to any of the claims 3 to 12, wherein the control unit (90) further comprises an auxiliary power supply 185 for generating one or more bias voltages (240, 250, 260) for biasing at least a corresponding pair of one or more comparing means (140, 142, 144) and the one or more switch driving means (190, 192, 194),
wherein the one or more bias voltages (240, 250, 260) are decoupled from one another.

14. The power controller (10) according to any of the claims 1 to 13, wherein the control unit (90) further comprises a timer (270) for monitoring the operational condition at predefined intervals of time.

15. The power controller (10) according to any of the claims 1 to 14 further comprising a display unit (280), wherein the display unit (280) is adapted for indicating at least one of the operational condition, the first power input (70), and the second power input (80).

16. A redundant power supply (20) comprising:
- the power controller (10) according to any of the claims 1 to 15,
- the first power supply (75), and
- the second power supply (85).

17. A method for supplying power to the load (30) using the power controller (10) according to any of the claims 1 to 15, the method comprising:
- a step (400) of receiving the first power input (70) at the input terminal (42) of the first switch (40),
- a step (410) of receiving the second power input (80) at the input terminal (52) of the second switch (50), and
- a step (420) of connecting the output terminal (64) of the third switch (60) to the load (30), **characterized by**:
- a step of comparing input voltages (V₁, V₂, Vₙ) with respective predefined voltages (Vₚ₁, Vₚ₂, Vₚₙ);
- a step (470) of controlling the opening and the closing of at least one of the first switch (40), the second switch (50), and the third switch (60) for supplying the power to the load (30),
wherein the step (470) of controlling is responsive to the operational condition of the power controller (10) that occurs when any of the input voltages (Vₚ₁, Vₚ₂, Vₚₙ) is lower than the respective predefined voltages (Vₚ₁, Vₚ₂, Vₚₙ) .

18. The method according to claim 17 further comprising:
- a step (430) of comparing the first input voltage (V₁) with the first predefined input voltage (Vₚ₁), and
- a step (440) of comparing the second input voltage (V₂) with the second predefined input voltage (Vₚ₂),
wherein the step (470) of controlling further comprises:
- opening the first switch (40) when the first input voltage (V₁) is lower than the first predefined input voltage (Vₚ₁), and
- opening the second switch (50) when the second input voltage (V₂) is lower than the second predefined input voltage (Vₚ₂).

19. The method according to claim 17 or 18 further comprising:
- a step (450) of comparing the nodal voltage (Vₙ) with the predefined nodal voltage (Vₚₙ),
wherein the step (470) of controlling further comprises:
- opening the third switch (60) when the nodal voltage (Vₙ) is lower than the predefined nodal voltage (Vₚₙ).

20. The method according to claim 19 further comprising:
- a step (460) of monitoring the nodal voltage (Vₙ) at predefined intervals of time.

21. The method according to any of the claims 17 to 20 further comprising:
- a step (480) of indicating at least one of the operational condition, the first input voltage (V₁), the second input voltage (V₂), the nodal voltage (Vₙ), an output voltage (Vₒ) across the load (30).

## Patentansprüche

1. Leistungsregler (10) zum Versorgen einer Last (30) mit Leistung, wobei der Leistungsregler (10) umfasst:
- einen ersten Schalter (40), einen zweiten Schalter (50) und einen dritten Schalter (60), die jeweils einen Eingangsanschluss (42, 52, 62), einen Ausgangsanschluss (44, 54, 64) und einen Steueranschluss (46, 56, 66) umfassen,
wobei die Eingangsanschlüsse (42, 52) des ersten Schalters (40) und des zweiten Schalters (50) einen ersten Leistungseingang (70) bzw. einen zweiten Leistungseingang (80) empfangen und wobei der Ausgangsanschluss (64) des dritten Schalters (60) die Leistung an die Last (30) liefert, wobei der Eingangsanschluss (62) des dritten Schalters (60) und die Ausgangsanschlüsse (44, 54) des ersten Schalters (40) sowie des zweiten Schalters (50) dafür ausgelegt sind, einen Knoten (100) zu bilden,
**gekennzeichnet durch**:
- eine Steuereinheit (90) zum Vergleichen einer oder mehrerer Eingangsspannungen (V₁, V₂, Vₙ) an den Eingangsanschlüssen (42, 52) und am Knoten (100) mit einer oder mehreren jeweiligen vordefinierten Spannungen (Vₚ₁, Vₚ₂, Vₚₙ) und Steuern wenigstens eines der Steueranschlüsse (46, 56, 66) zum Öffnen und Schließen des ersten Schalters (40) und/oder des zweiten Schalters (50) und/oder des dritten Schalters (60) in Reaktion auf eine Betriebsbedingung des Leistungsreglers (10), falls eine der Eingangsspannungen (V₁, V₂, Vₙ) niedriger als die jeweiligen vordefinierten Spannungen (Vₚ₁, Vₚ₂, Vₚₙ) ist,
wobei der Knoten (100) mit der Steuereinheit (90) verbunden ist, um die Steuereinheit (90) zu aktivieren, um ein erstes Steuersignal (110) und/oder ein zweites Steuersignal (120) und/oder ein drittes Steuersignal (130) zum Steuern wenigstens eines der jeweiligen Steueranschlüsse (46, 56, 66) zu erzeugen.

2. Leistungsregler (10) gemäß Anspruch 1,
wobei der erste Leistungseingang (70) von einer ersten Stromversorgung (75) empfangen wird, und
wobei der zweite Leistungseingang (80) von einer zweiten Stromversorgung (85) empfangen wird.

3. Leistungsregler (10) gemäß Anspruch 1, wobei die Steuereinheit (90) ferner ein oder mehrere Vergleichsmittel (140, 142, 144) umfasst zum Vergleichen von wenigstens
- einer ersten Eingangsspannung (V₁) mit einer ersten vordefinierten Eingangsspannung (Vₚ₁),
- einer zweiten Eingangsspannung (V₂) mit einer zweiten vordefinierten Eingangsspannung (Vₚ₂), und
- einer Knotenspannung (Vₙ) mit einer vordefinierten Knotenspannung (Vₚₙ),
wobei die erste Eingangsspannung (V₁) ein Potenzialunterschied zwischen dem Eingangsanschluss (42) des ersten Schalters (40) und einer Erde (180) des Leistungsreglers (10) ist,
wobei die zweite Eingangsspannung (V₂) der Potenzialunterschied zwischen dem Eingangsanschluss (52) des zweiten Schalters (50) und der Erde (180) ist, und
wobei die Knotenspannung (Vₙ) der Potenzialunterschied zwischen dem Knoten (100) und der Erde (180) ist.

4. Leistungsregler (10) gemäß Anspruch 2 oder 3, wobei die Betriebsbedingung eine Eingangs-Unterspannung ist,
wobei das erste Steuersignal (110) den ersten Schalter (40) öffnet, wenn die erste Eingangsspannung (V₁) niedriger als die erste vordefinierte Eingangsspannung (Vₚ₁) ist, und
wobei das zweite Steuersignal (120) den zweiten Schalter (50) öffnet, wenn die zweite Eingangsspannung (V₂) niedriger als die zweite vordefinierte Eingangsspannung (Vₚ₂) ist.

5. Leistungsregler (10) gemäß einem der Ansprüche 2 bis 4, wobei die Betriebsbedingung ein Ausgangs-Kurzschluss ist,
wobei das dritte Steuersignal (130) den dritten Schalter (60) öffnet, wenn die Knotenspannung (Vₙ) niedriger als die vordefinierte Knotenspannung (Vₙₚ) ist.

6. Leistungsregler (10) gemäß einem der Ansprüche 3 bis 5, wobei das eine oder die mehreren Vergleichsmittel (140, 142, 144) ferner ein oder mehrere Schalteransteuermittel (190, 192, 194) umfassen, um jeweils das erste Steuersignal (110) und/oder das zweite Steuersignal (120) und/oder das dritte Steuersignal (130) zu verstärken.

7. Leistungsregler (10) gemäß einem der Ansprüche 1 bis 6, wobei der erste Schalter (40) und/oder der zweite Schalter (50) und/oder der dritte Schalter (60) eine Halbleitervorrichtung ist.

8. Leistungsregler (10) gemäß einem der Ansprüche 1 bis 7, wobei der erste Schalter (40), der zweite Schalter (50) und der dritte Schalter (60) Metalloxid-Halbleiter-Feldeffekttransistor(Metal-Oxide Semiconductor Field-Effect Transistor, MOSFET)-Schalter sind, die jeweils eine integrierte Diode (48, 58, 68), eine Source-Elektrode, eine Drain-Elektrode und eine Gate-Elektrode umfassen, wobei die jeweiligen Gate-Elektroden (46, 56, 66) das Öffnen und Schließen der jeweiligen MOSFET-Schalter (40, 50, 60) steuern.

9. Leistungsregler (10) gemäß Anspruch 8, wobei
- der erste MOSFET-Schalter (40) mit der ersten Stromversorgung (75) und der Last (30) in Reihe geschaltet ist, wobei seine integrierte Diode (48) in Durchlassrichtung von der ersten Stromversorgung (75) zur Last (30) vorgespannt ist, und
- der zweite MOSFET-Schalter (50) mit der zweiten Stromversorgung (85) und der Last (30) in Reihe geschaltet ist, wobei seine integrierte Diode (58) in Durchlassrichtung von der zweiten Stromversorgung (85) zur Last (30) vorgespannt ist.

10. Leistungsregler (10) gemäß Anspruch 8 oder 9, wobei
- der dritte MOSFET (60) mit dem Knoten (100) und der Last (30) in Reihe geschaltet ist, wobei seine integrierte Diode (68) in Sperrrichtung vom Knoten (100) zur Last (30) vorgespannt ist,
wobei die erste Drain-Elektrode (44) des ersten MOSFET-Schalters (40), die zweite Drain-Elektrode (54) des zweiten MOSFET-Schalters (50) und die dritte Drain-Elektrode (62) des dritten MOSFET-Schalters (60) dafür ausgelegt sind, den Knoten (100) zu bilden.

11. Leistungsregler (10) gemäß einem der Ansprüche 6 bis 10, wobei das eine oder die mehreren Schalteransteuermittel (190, 192, 194) ferner wenigstens einen oder mehrere Entladewege für die jeweiligen Steueranschlüsse (46, 56, 66) umfassen.

12. Leistungsregler (10) gemäß einem der Ansprüche 6 bis 11, wobei wenigstens eines der Schalteransteuermittel (190, 192, 194) eine Gegentakt("Totem-Pole")-Schaltung umfasst.

13. Leistungsregler (10) gemäß einem der Ansprüche 3 bis 12, wobei die Steuereinheit (90) ferner eine Hilfsstromversorgung (185) umfasst, um eine oder mehrere Vorspannungen (240, 250, 260) zum Vorspannen wenigstens eines entsprechenden Paares von einem oder mehreren Vergleichsmitteln (140, 142, 144) und des einen oder der mehreren Schalteransteuermittel (190, 192, 194) zu erzeugen, wobei die eine oder die mehreren Vorspannungen (240, 250, 260) voneinander entkoppelt sind.

14. Leistungsregler (10) gemäß einem der Ansprüche 1 bis 13, wobei die Steuereinheit (90) ferner einen Zeitgeber (270) zum Überwachen der Betriebsbedingung in vordefinierten Zeitintervallen umfasst.

15. Leistungsregler (10) gemäß einem der Ansprüche 1 bis 14, ferner eine Anzeigeeinheit (280) umfassend, wobei die Anzeigeeinheit (280) dafür ausgelegt ist, die Betriebsbedingung und/oder den ersten Leistungseingang (70) und/oder den zweiten Leistungseingang (80) anzuzeigen.

16. Redundante Stromversorgung (20), umfassend:
- den Leistungsregler (10) gemäß einem der Ansprüche 1 bis 15,
- die erste Stromversorgung (75), und
- die zweite Stromversorgung (85).

17. Verfahren zum Liefern von Leistung an die Last (30) unter Verwendung des Leistungsreglers (10) gemäß einem der Ansprüche 1 bis 15, wobei das Verfahren umfasst:
- einen Schritt (400) des Empfangens des ersten Leistungseingangs (70) am Eingangsanschluss (42) des ersten Schalters (40),
- einen Schritt (410) des Empfangens des zweiten Leistungseingangs (80) am Eingangsanschluss (52) des zweiten Schalters (50), und
- einen Schritt (420) des Verbindens des Ausgangsanschlusses (64) des dritten Schalters (60) mit der Last (30), **gekennzeichnet durch**:
- einen Schritt des Vergleichens von Eingangsspannungen (V₁, V₂, Vₙ) mit jeweiligen vordefinierten Spannungen (Vₚ₁, Vₚ₂, Vₚₙ);
- einen Schritt (470) des Steuerns des Öffnens und Schließens des ersten Schalters (40) und/oder des zweiten Schalters (50) und/oder des dritten Schalters (60) zum Liefern der Leistung an die Last (30),
wobei der Schritt (470) des Steuerns in Reaktion auf die Betriebsbedingung des Leistungsreglers (10) erfolgt, die eintritt, wenn eine der Eingangsspannungen (Vₚ₁, Vₚ₂, Vₚₙ) niedriger als die jeweiligen vordefinierten Spannungen (Vₚ₁, Vₚ₂, Vₚₙ) ist.

18. Verfahren gemäß Anspruch 17, ferner umfassend:
- einen Schritt (430) des Vergleichens der ersten Eingangsspannung (V₁) mit der ersten vordefinierten Eingangsspannung (Vₚ₁), und
- einen Schritt (440) des Vergleichens der zweiten Eingangsspannung (V₂) mit der zweiten vordefinierten Eingangsspannung (Vₚ₂),
wobei der Schritt (470) des Steuerns ferner umfasst:
- den ersten Schalter (40) zu öffnen, wenn die erste Eingangsspannung (V₁) niedriger als die erste vordefinierte Eingangsspannung (Vₚ₁) ist, und
- den zweiten Schalter (50) zu öffnen, wenn die zweite Eingangsspannung (V₂) niedriger als die zweite vordefinierte Eingangsspannung (Vₚ₂) ist.

19. Verfahren gemäß Anspruch 17 oder 18, ferner umfassend:
- einen Schritt (450) des Vergleichens der Knotenspannung (Vₙ) mit der vordefinierten Knotenspannung (Vₚₙ),
wobei der Schritt (470) des Steuerns ferner umfasst:
- den dritten Schalter (60) zu öffnen, wenn die Knotenspannung (Vₙ) niedriger als die vordefinierte Knotenspannung (Vₚₙ) ist.

20. Verfahren gemäß Anspruch 19, ferner umfassend:
- einen Schritt (460) des Überwachens der Knotenspannung (Vₙ) in vordefinierten Zeitintervallen.

21. Verfahren gemäß einem der Ansprüche 17 bis 20, ferner umfassend:
- einen Schritt (480) des Anzeigens der Betriebsbedingung und/oder der ersten Eingangsspannung (V₁) und/oder der zweiten Eingangsspannung (V₂) und/oder der Knotenspannung (Vₙ) und/oder einer Ausgangsspannung (Vₒ) über die Last (30).

## Revendications

1. Contrôleur d'alimentation (10) destiné à fournir une puissance à une charge (30), le contrôleur d'alimentation (10) comprenant :
- un premier commutateur (40), un deuxième commutateur (50) et un troisième commutateur (60), comprenant chacun une borne d'entrée (42, 52, 62), une borne de sortie (44, 54, 64) et une borne de commande (46, 56, 66),
les bornes d'entrée (42, 52) du premier commutateur (40) et du deuxième commutateur (50) recevant respectivement une première entrée de puissance (70) et une deuxième entrée de puissance (80), et la borne de sortie (64) du troisième commutateur (60) fournissant la puissance à la charge (30), la borne d'entrée (62) du troisième commutateur (60) et les bornes de sortie (44, 54) du premier commutateur (40) et du deuxième commutateur (50) étant adaptées à former un noeud (100),
**caractérisé par** :
- une unité de commande (90) destinée à comparer une ou plusieurs tensions d'entrée (V₁, V₂, Vₙ) aux bornes d'entrée (42, 52) et au noeud (100) à une ou plusieurs tensions prédéfinies respectives (Vₚ₁, Vₚ₂, Vₚₙ) et à commander au moins une des bornes de commande (46, 56, 66) aux fins d'ouvrir et de fermer respectivement au moins un commutateur parmi le premier commutateur (40), le deuxième commutateur (50) et le troisième commutateur (60) en réponse à un état de fonctionnement du contrôleur d'alimentation (10) si l'une quelconque des tensions d'entrée (V₁, V₂, Vₙ) est inférieure aux tensions prédéfinies respectives (Vₚ₁, Vₚ₂, Vₚₙ),
le noeud (100) étant relié à l'unité de commande (90) pour activer l'unité de commande (90) aux fins de générer au moins un signal de commande parmi un premier signal de commande (110), un deuxième signal de commande (120) et un troisième signal de commande (130) aux fins de commander au moins une des bornes de commande respectives (46, 56, 66).

2. Contrôleur d'alimentation (10) selon la revendication 1,
dans lequel la première entrée de puissance (70) est reçue depuis une première alimentation électrique (75), et
dans lequel la deuxième entrée de puissance (80) est reçue depuis une deuxième alimentation électrique (85).

3. Contrôleur d'alimentation (10) selon la revendication 1, dans lequel l'unité de commande (90) comprend en outre un ou plusieurs moyens de comparaison (140, 142, 144) destinés à comparer au moins
- une première tension d'entrée (V₁) à une première tension d'entrée prédéfinie (Vₚ₁).
- une deuxième tension d'entrée (V₂) à une deuxième tension d'entrée prédéfinie (Vₚ₂), et
- une tension nodale (Vₙ) à une tension nodale prédéfinie (Vₚₙ),
la première tension d'entrée (V₁) étant une différence de potentiel entre la borne d'entrée (42) du premier commutateur (40) et une masse (180) du contrôleur d'alimentation (10),
la deuxième tension d'entrée (V₂) étant la différence de potentiel entre la borne d'entrée (52) du deuxième commutateur (50) et la masse (180), et
la tension nodale (Vₙ) étant la différence de potentiel entre le noeud (100) et la masse (180).

4. Contrôleur d'alimentation (10) selon la revendication 2 ou 3,
dans lequel l'état de fonctionnement est une sous-tension d'entrée,
dans lequel le premier signal de commande (110) ouvre le premier commutateur (40) lorsque la première tension d'entrée (V₁) est inférieure à la première tension d'entrée prédéfinie (Vₚ₁), et
dans lequel le deuxième signal de commande (120) ouvre le deuxième commutateur (50) lorsque la deuxième tension d'entrée (V₂) est inférieure à la deuxième tension d'entrée prédéfinie (Vₚ₂).

5. Contrôleur d'alimentation (10) selon l'une quelconque des revendications 2 à 4,
dans lequel l'état de fonctionnement est un court-circuit de sortie,
dans lequel le troisième signal de commande (130) ouvre le troisième commutateur (60) lorsque la tension nodale (Vₙ) est inférieure à la tension nodale prédéfinie (Vₙₚ).

6. Contrôleur d'alimentation (10) selon l'une quelconque des revendications 3 à 5, dans lequel le ou les moyens de comparaison (140, 142, 144) comprennent en outre un ou plusieurs moyens d'attaque de commutateur (190, 192, 194) destinés à amplifier respectivement au moins un signal de commande parmi le premier signal de commande (110), le deuxième signal de commande (120) et le troisième signal de commande (130).

7. Contrôleur d'alimentation (10) selon l'une quelconque des revendications 1 à 6, dans lequel au moins un commutateur parmi le premier commutateur (40), le deuxième commutateur (50) et le troisième commutateur (60) est un dispositif semiconducteur.

8. Contrôleur d'alimentation (10) selon l'une quelconque des revendications 1 à 7, dans lequel le premier commutateur (40), le deuxième commutateur (50) et le troisième commutateur (60) sont des commutateurs à transistor à effet de champ métal/oxyde/semi-conducteur (MOSFET), comprenant chacun une diode intégrée (48, 58, 68), une électrode de source, une électrode de drain et une électrode de grille, les électrodes de grille respectives (46, 56, 66) commandant l'ouverture et la fermeture des commutateurs à MOSFET respectifs (40, 50, 60) .

9. Contrôleur d'alimentation (10) selon la revendication 8, dans lequel
- le premier commutateur à MOSFET (40) est relié en série à la première alimentation électrique (75) et à la charge (30), sa diode intégrée (48) étant polarisée en direct de la première alimentation électrique (75) à la charge (30), et
- le deuxième commutateur à MOSFET (50) est relié en série à la deuxième alimentation électrique (85) et à la charge (30), sa diode intégrée (58) étant polarisée en direct de la deuxième alimentation électrique (85) à la charge (30).

10. Contrôleur d'alimentation (10) selon la revendication 8 ou 9, dans lequel
- le troisième MOSFET (60) est relié en série au noeud (100) et à la charge (30), sa diode intégrée (68) étant polarisée en inverse du noeud (100) à la charge (30), la première électrode de drain (44) du premier commutateur à MOSFET (40), la deuxième électrode de drain (54) du deuxième commutateur à MOSFET (50) et la troisième électrode de drain (62) du troisième commutateur à MOSFET (60) étant adaptées à former le noeud (100).

11. Contrôleur d'alimentation (10) selon l'une quelconque des revendications 6 à 10, dans lequel le ou les moyens d'attaque de commutateur (190, 192, 194) comprennent en outre au moins un ou plusieurs chemins de décharge pour les bornes de commande respectives (46, 56, 66).

12. Contrôleur d'alimentation (10) selon l'une quelconque des revendications 6 à 11, dans lequel au moins un des moyens d'attaque de commutateur (190, 192, 194) comprend un circuit en totem pôle.

13. Contrôleur d'alimentation (10) selon l'une quelconque des revendications 3 à 12, dans lequel le circuit de commande (90) comprend en outre une alimentation électrique auxiliaire (185) destinée à générer une ou plusieurs tensions de polarisation (240, 250, 260) destinées à polariser au moins une paire correspondante d'un ou de plusieurs moyens de comparaison (140, 142, 144) et du ou des moyens d'attaque de commutateur (190, 192, 194), la ou les tensions de polarisation (240, 250, 260) étant découplées les unes des autres.

14. Contrôleur d'alimentation (10) selon l'une quelconque des revendications 1 à 13, dans lequel l'unité de commande (90) comprend en outre un temporisateur (270) destiné à surveiller l'état de fonctionnement à des intervalles de temps prédéfinis.

15. Contrôleur d'alimentation (10) selon l'une quelconque des revendications 1 à 14, comprenant en outre une unité d'affichage (280), l'unité d'affichage (280) étant adaptée à indiquer l'état de fonctionnement et/ou la première entrée de puissance (70) et/ou la deuxième entrée de puissance (80).

16. Alimentation électrique redondante (20), comprenant :
- le contrôleur d'alimentation (10) selon l'une quelconque des revendications 1 à 15,
- la première alimentation électrique (75), et
- la deuxième alimentation électrique (85).

17. Procédé destiné à fournir une puissance à la charge (30) au moyen du contrôleur d'alimentation (10) selon l'une quelconque des revendications 1 à 15, le procédé comprenant :
- une étape (400) de réception de la première entrée de puissance (70) à la borne d'entrée (42) du premier commutateur (40),
- une étape (410) de réception de la deuxième entrée de puissance (80) à la borne d'entrée (52) du deuxième commutateur (50), et
- une étape (420) de liaison de la borne de sortie (64) du troisième commutateur (60) à la charge (30), **caractérisé par** :
- une étape de comparaison de tensions d'entrée (V₁, V₂, Vₙ) des tensions prédéfinies respectives (Vₚ₁, Vₚ₂, Vₚₙ) ;
- une étape (470) de commande de l'ouverture et de la fermeture d'au moins un commutateur parmi le premier commutateur (40), le deuxième commutateur (50) et le troisième commutateur (60) aux fins de fournir la puissance à la charge (30),
l'étape (470) de commande s'effectuant en réponse à l'état de fonctionnement du contrôleur d'alimentation (10) qui survient lorsque l'une quelconque des tensions d'entrée (Vₚ₁, Vₚ₂, Vₚₙ) est inférieure aux tensions prédéfinies respectives (Vₚ₁, Vₚ₂, Vₚₙ).

18. Procédé selon la revendication 17, comprenant en outre :
- une étape (430) de comparaison de la première tension d'entrée (V₁) à la première tension d'entrée prédéfinie (Vₚ₁), et
- une étape (440) de comparaison de la deuxième tension d'entrée (V₂) à la deuxième tension d'entrée prédéfinie (Vₚ₂),
l'étape (470) de commande comprenant en outre :
- l'ouverture du premier commutateur (40) lorsque la première tension d'entrée (V₁) est inférieure à la première tension d'entrée prédéfinie (Vₚ₁), et
- l'ouverture du deuxième commutateur (50) lorsque la deuxième tension d'entrée (V₂) est inférieure à la deuxième tension d'entrée prédéfinie (Vₚ₂).

19. Procédé selon la revendication 17 ou 18, comprenant en outre :
- une étape (450) de comparaison de la tension nodale (Vₙ) à la tension nodale prédéfinie (Vₚₙ),
l'étape (470) de commande comprenant en outre :
- l'ouverture du troisième commutateur (60) lorsque la tension nodale (Vₙ) est inférieure à la tension nodale prédéfinie (Vₚₙ).

20. Procédé selon la revendication 19, comprenant en outre :
- une étape (460) de surveillance de la tension nodale (Vₙ) à des intervalles de temps prédéfinis.

21. Procédé selon l'une quelconque des revendications 17 à 20, comprenant en outre :
- une étape (480) d'indication de l'état de fonctionnement et/ou de la première tension d'entrée (V₁) et/ou de la deuxième tension d'entrée (V₂) et/ou de la tension nodale (Vₙ) et/ou d'une tension de sortie (Vₒ) aux bornes de la charge (30) .
